# DEMANDE DE BREVET EUROPEEN

(11) **EP 2 334 033 A1**
(43) Date de publication de la demande: **15.06.2011**
(21) Numéro de dépôt: 10194338.9
(22) Date de dépôt: 09.12.2010
(51) Int. Cl.: H04L 29/06, H04M 3/537, H04M 3/42, H04M 3/436

(54) **Procédé et système de notification d'un terminal appelant**

(30) Priorité: 10.12.2009 FR 0958850
(71) Demandeur: France Telecom, 75015 Paris (FR)
(72) Inventeur: Poppleton, Marc, 22140, Tonquedec (FR); Pieto, Loïc, 22300, Rospez (FR)

(57) **Abrégé**

L'invention concerne un procédé de notification d'un terminal appelant ayant initié un établissement d'une session de communication avec un terminal appelé, comportant une étape (E1) de réception d'une demande d'établissement d'une session de communication avec ledit terminal appelé, et une étape (E2) de transmission de ladite demande audit terminal appelé, **caractérisé en ce qu**'il comporte en outre:
- une étape (E3) de détection d'un évènement, ledit évènement étant un refus de ladite demande par un utilisateur dudit terminal appelé,
- une étape (E5) de sélection d'un message de notification associé audit évènement,
- et une étape (E6) d'envoi dudit message audit terminal appelant.

## Description

La présente invention se rapporte de manière générale au domaine des télécommunications, et plus précisément à un procédé de notification à un utilisateur d'un terminal appelant, de l'indisponibilité de l'utilisateur qu'il appelle.

Les procédés de notification actuels utilisent des répondeurs situés soit dans le réseau de communication de l'utilisateur appelé, soit dans la sphère domestique de cet utilisateur appelé. Ainsi lorsque l'utilisateur appelant compose le numéro de téléphone de l'utilisateur appelé, le terminal de l'utilisateur appelé sonne, et sur non réponse de l'utilisateur, c'est-à-dire au bout d'une durée prédéterminée, si l'utilisateur appelé n'a toujours pas décroché, l'utilisateur appelant est mis en relation avec un répondeur vocal. De même, lorsque l'utilisateur appelé ne décroche pas mais appuie sur une touche spécifique de son terminal permettant de raccrocher sans avoir décroché, touche qui existe sur la plupart des terminaux mobiles, l'utilisateur appelant est renvoyé sur la messagerie vocale de l'utilisateur appelé.

Or, dans le premier cas, c'est-à-dire non décrochage au bout d'une durée prédéterminée, et dans le deuxième cas, c'est-à-dire raccrochage volontaire avant même l'établissement d'une communication, la cause de l'indisponibilité de l'utilisateur est différente. En effet dans le premier cas l'utilisateur appelé est généralement absent ou n'a pas la possibilité d'être notifié de l'appel entrant en provenance de l'utilisateur appelant, par exemple parce que son terminal mobile est éteint. En revanche dans le deuxième cas, l'utilisateur a été notifié de l'appel entrant mais ne peut y répondre, par exemple parce qu'il est en réunion. Les techniques de notification de l'art antérieur ne permettent donc pas à l'utilisateur appelant de savoir si l'échec de son appel est dû à l'absence de l'utilisateur appelé ou à une indisponibilité momentanée de celui-ci, et si l'utilisateur appelé a bien été notifié de l'appel.

Un des buts de l'invention est de remédier à au moins une partie des inconvénients de la technique antérieure en fournissant un procédé de notification et un système de communication permettant d'informer l'utilisateur appelant que son appel n'a pu être pris tout en différenciant le cas où l'utilisateur appelé a volontairement raccroché son terminal du cas où il n'a pas décroché au bout d'une durée prédéterminée.

A cette fin, l'invention propose un procédé de notification d'un terminal appelant ayant initié un établissement d'une session de communication avec un terminal appelé, comportant une étape de réception d'une demande d'établissement d'une session de communication avec ledit terminal appelé, et une étape de transmission de ladite demande audit terminal appelé, **caractérisé en ce qu**'il comporte en outre:
- une étape de détection d'un évènement, ledit évènement étant un refus de ladite demande par un utilisateur dudit terminal appelé,
- une étape de sélection d'un message de notification associé audit évènement,
- et une étape d'envoi dudit message audit terminal appelant.

Grâce à l'invention, lorsque l'utilisateur du terminal appelé appuie sur la touche "raccroché" de son terminal, le message de refus correspondant envoyé par le terminal appelé dans le réseau de communication auquel il est connecté est intercepté par le système de communication mettant en oeuvre le procédé de notification selon l'invention, qui envoie alors un message de notification approprié au terminal appelant. Ainsi l'utilisateur du terminal appelant reçoit un message d'indisponibilité approprié, l'avertissant que l'utilisateur appelé a bien été notifié de l'appel mais n'a pu y répondre.

L'invention est de plus simple à mettre en oeuvre du point de vue de l'utilisateur du terminal appelé, qui n'a pas besoin de sélectionner lui-même ou de composer lui-même un message à envoyer à l'utilisateur du terminal appelant.

Avantageusement, ledit message de notification est un message vocal ou un message texte ou multimédia.

En plus ou à la place d'une notification vocale à l'utilisateur appelant, le système de communication selon l'invention lui envoie une notification textuelle ou multimédia, en fonction des capacités du terminal appelant. Les messages de notification utilisés sont par exemple des messages vocaux, des messages courts ou SMS (d'après l'anglais "Short Message Service"), des messages multimédia encore appelés MMS (d'après l'anglais "Multimedia Message Service"), ou des courriers électroniques. Le contenu de ces messages est pré-rempli par l'utilisateur du terminal appelé, par l'intermédiaire par exemple d'une interface web de configuration du système de communication mettant en oeuvre l'invention.

Avantageusement, lors de ladite étape de sélection, ledit message de notification associé audit évènement est personnalisé en fonction d'une adresse de communication dudit terminal appelant.

Ainsi le message de notification envoyé à l'appelant diffère en fonction de l'identité de cet appelant. Cela permet à l'utilisateur du procédé de notification selon l'invention d'avertir les membres de sa famille de son indisponibilité de façon moins formelle par exemple, que les personnes appelantes qui ne sont pas identifiées par le système de communication mettant en oeuvre l'invention.

Avantageusement, ladite étape de sélection dépend d'une étape précédente de localisation du terminal appelé ou de consultation d'un agenda électronique d'un utilisateur dudit terminal appelé.

Cette caractéristique permet d'enrichir le message de notification qui sera envoyé à l'appelant, d'informations contextuelles. Par exemple, le système de communication selon l'invention détermine automatiquement que l'utilisateur est en réunion en consultant l'agenda électronique de l'utilisateur, et cette information est vocalisée à l'appelant. D'autres informations telles que la localisation de l'utilisateur, sont utilisables par le système de communication selon l'invention, pour obtenir des informations contextuelles permettant d'enrichir le message de notification. Il s'agit par exemple d'un message prévenant l'appelant que l'utilisateur est sur l'autoroute et est donc indisponible pour prendre l'appel. Ces informations sont déductibles par exemple d'une ou plusieurs localisations de l'utilisateur, permettant d'obtenir sa vitesse par exemple, ainsi que d'une base de données de géo-localisation.

Avantageusement, ladite étape de sélection dépend de règles préconfigurées par un utilisateur sur une interface de configuration.

Ces règles préconfigurées permettent également d'enrichir le message de notification d'informations contextuelles. Ces règles sont par exemple des horaires prédéfinis pour lesquels un certain message de notification doit être utilisé, pour certains appelants seulement.

L'invention concerne aussi un système de communication comportant des moyens de réception d'une demande d'établissement d'une session de communication envoyée par un terminal appelant à destination d'un terminal appelé, et des moyens de transmission de ladite demande audit terminal appelé, **caractérisé en ce qu**'il comporte en outre:
- des moyens de détection d'un évènement, ledit évènement étant un refus de ladite demande par un utilisateur dudit terminal appelé,
- des moyens de sélection d'un message de notification associé audit évènement,
- et des moyens d'envoi dudit message audit terminal appelant.

L'invention concerne également un programme d'ordinateur comportant des instructions pour mettre en oeuvre le procédé de notification selon l'invention, lorsqu'il est exécuté sur un ordinateur.

Le système de communication selon l'invention et le programme d'ordinateur selon l'invention présentent des avantages analogues à ceux du procédé de notification selon l'invention.

D'autres caractéristiques et avantages apparaîtront à la lecture d'un mode de réalisation préféré décrit en référence aux figures dans lesquelles:
- la figure 1 représente le système de communication selon l'invention, dans ce mode de réalisation,
- la figure 2 représente des étapes du procédé de notification selon l'invention, dans ce mode de réalisation,
- et la figure 3 représente un diagramme de flux illustrant une utilisation du procédé de notification selon l'invention.

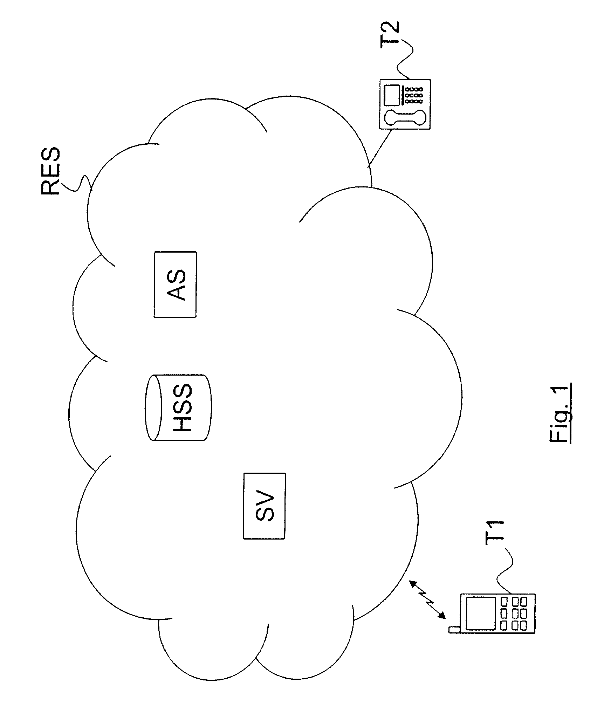

Selon un mode préféré de réalisation de l'invention représenté à la figure 1, le procédé de notification selon l'invention est implémenté dans un système de communication situé dans un réseau de communication RES, d'architecture IMS (d'après l'anglais "IP Multimedia Subsystem"), auquel sont connectés un terminal mobile T1 et un terminal fixe T2. Le système de communication selon l'invention comporte un serveur d'application AS utilisant le protocole SIP (d'après l'anglais "Session Initiation Protocol"), et un serveur vocal SV.

Le serveur d'application AS héberge une application de messagerie vocale améliorée, c'est-à-dire mettant en oeuvre le procédé de notification selon l'invention. Elle comporte une base de données de gestion de profils utilisateurs et une interface de configuration accessible par les utilisateurs de l'application de messagerie par le biais d'un navigateur web, ou d'un serveur vocal interactif, ou d'une application mobile. Cette interface de configuration permet à un utilisateur de préenregistrer ou de pré-remplir des messages vocaux, destinés à être envoyés à une personne appelante, et qui sont différents suivant que les cas où:
o l'utilisateur raccroche sans avoir décroché
o et où l'utilisateur ne répond pas.
Ces messages vocaux préenregistrés ou pré-remplis sont stockés dans le serveur vocal SV, qui dispose d'un module de synthèse vocale pour synthétiser vocalement les messages vocaux pré-remplis de manière textuelle par les utilisateurs.

De plus, le serveur d'application AS dispose d'une interface de programmation exposée pour permettre l'ajout de nouvelles règles de choix de messages vocaux ou SMS.

Enfin, le serveur d'application AS comporte une interface avec la base de données HSS (d'après l'anglais "Home Subscriber Server"), afin de provisionner des filtres iFC (d'après l'anglais "initial Filter Criteria") pour chacun des utilisateurs de l'application de messagerie. Ces filtres indiquent que pour un utilisateur donné, lorsqu'un message "SIP Invite" de demande d'établissement d'une session transite dans le réseau IMS à destination de cet utilisateur, ce message doit être intercepté par le réseau et envoyé au serveur d'application AS, qui fonctionnera alors en mode "proxy" pour les messages suivants liés à cette session.

Il est à noter que dans ce mode de réalisation préféré de l'invention, le réseau de communication RES est un réseau d'architecture IMS, mais l'invention est également implémentable dans d'autres types de réseau de communication, tels qu'un réseau RTC ("réseau téléphonique commuté") ou encore un réseau mobile de technologie d'accès GSM (d'après l'anglais "Global System for Mobile Communications") ou UMTS (d'après l'anglais "Universal Mobile Telecommunications System"). De plus, les messages de notification sont dans ce mode de réalisation préféré de l'invention, des messages vocaux, mais d'autres modes de réalisation de l'invention sont possibles dans lesquels les messages de notification sont par exemple des messages courts SMS, ou des messages instantanés, ou encore des courriels.

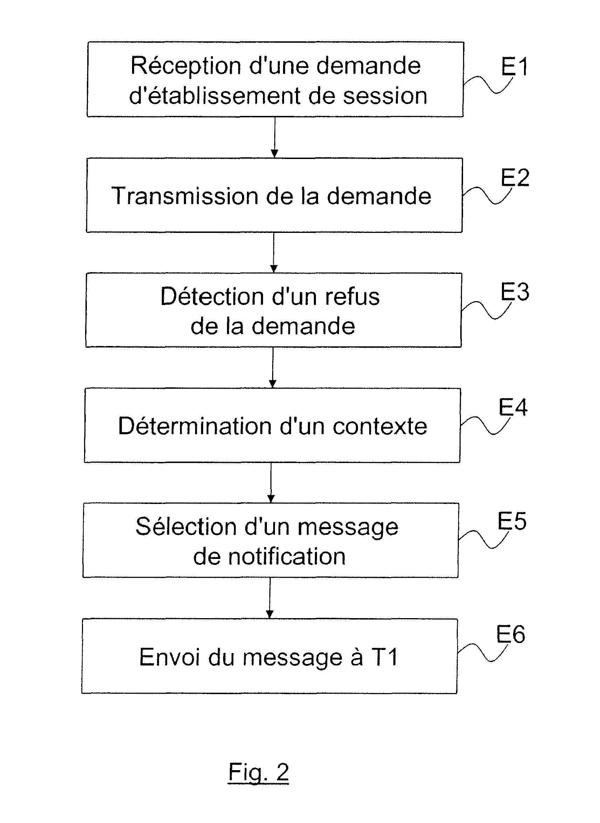

En référence à la figure 2, le procédé de notification selon l'invention est représenté sous la forme d'un algorithme comportant des étapes E1 à E6.

On suppose, préalablement à l'exécution du procédé de notification selon l'invention, qu'un utilisateur du terminal T2, également utilisateur de l'application de messagerie améliorée hébergée dans le serveur d'application AS, a configuré via cette application:
o un message vocal spécifique à envoyer à la personne tentant de le joindre lorsqu'il reçoit un appel de cette personne et qu'il refuse cet appel en appuyant sur la touche "raccroché" de son terminal T2,
o un message vocal par défaut à envoyer à la personne tentant de le joindre lorsqu'il ne répond pas à cet appel et laisse sonner son terminal T2.
Le message vocal spécifique configuré par l'utilisateur du terminal T2 diffère éventuellement selon différentes règles prédéfinies, liées par exemple à l'identité de la personne tentant de joindre l'utilisateur du terminal T2, la localisation de cet utilisateur, ou encore son agenda.
On suppose de plus qu'un utilisateur du terminal T1 tente de joindre l'utilisateur du terminal T2. Il compose pour cela le numéro de téléphone ou l'adresse SIP de l'utilisateur du terminal T2, ce qui provoque l'envoi, dans le réseau de communication RES, d'un message de demande d'établissement d'appel, qui est un message "SIP Invite".

L'étape E1 est alors la réception, par le serveur d'application AS, de cette demande d'établissement d'appel, grâce au provisionnement, pour l'utilisateur du terminal T2, d'un critère de filtrage approprié dans le HSS.

L'étape suivante E2 est ensuite la transmission au terminal T2, par le serveur d'application AS, de cette demande d'établissement d'appel, le serveur d'application AS étant maintenant en coupure des messages de signalisation échangés entre le terminal T1 et le terminal T2 relatifs à cette demande d'établissement d'appel. On suppose ici que le terminal T2 sonne et que l'utilisateur du terminal T2 appuie sur la touche "raccroché" de son terminal, n'étant pas disponible pour répondre à cet appel. En effet, dans les autres cas où l'appel est pris ou l'utilisateur se contente de ne pas répondre à cet appel, l'invention n'est pas mise en oeuvre. L'appui sur la touche "raccroché" du terminal T2 provoque l'envoi par celui-ci, d'un message "SIP 488" de refus de l'appel, dans le réseau de communication RES.

L'étape suivante E3 est la détection du refus de l'appel par le serveur d'application AS. Le serveur d'application AS étant en coupure des messages de signalisation entre le terminal T1 et le terminal T2, une telle détection a lieu lorsque le serveur d'application AS a reçu le message de demande d'établissement d'appel du terminal T1, puis le message de refus du terminal T2, sans avoir, entre la réception de ces deux messages, reçu un message d'acceptation de la demande d'établissement d'appel. Un tel message d'acceptation de la demande d'établissement d'appel aurait été ici un message "SIP 200 OK", envoyé par terminal T2. En effet, si un tel message "SIP 200 OK" avait été reçu par le serveur d'application AS, le raccrochage d'un des terminaux T1 ou T2 aurait provoqué la réception d'un message "SIP Bye", par le serveur d'application AS.

L'étape suivante E4 est la détermination d'un contexte lié à l'appel pour l'utilisateur du terminal T2. Ce contexte est déterminé par le serveur d'application AS par consultation de différentes sources d'information telles que:
o un serveur de localisation permettant de fournir la localisation de l'utilisateur du terminal T2, et éventuellement des données liés à cette localisation, tels que le nom du lieu correspondant à cette localisation par exemple,
o un agenda en ligne de l'utilisateur,
o les informations contenues dans la signalisation de l'appel, telles que l'adresse de communication de l'appelant, utilisateur du terminal T1,
o une horloge, etc
L'ensemble des informations ainsi obtenues par le serveur d'application AS permet de déterminer par exemple que l'appel se situe dans un contexte professionnel pour l'utilisateur du terminal T2, alors que celui-ci est en congés.

L'étape suivante E5 est la sélection d'un message de notification par le serveur d'application AS. Dans cette étape E5 le serveur d'application AS sélectionne un message de notification spécifique aux refus d'appels de l'utilisateur du terminal T2, c'est-à-dire un message de notification différent du message prévu par défaut lorsque l'utilisateur du terminal T2 laisse son terminal sonner sans répondre. Lorsque l'utilisateur du terminal T2 a préconfiguré plusieurs messages de notification spécifiques aux refus d'appel, cette sélection dépend de règles, préconfigurées par l'utilisateur du terminal T2, de choix ou de création du message de notification à envoyer à l'appelant. Ces règles utilisent par exemple le contexte lié à l'appel déterminé à l'étape E4.

Enfin l'étape E6 est la notification du message sélectionné à l'étape E5 à l'utilisateur du terminal T1. Cette notification est effectuée par le serveur vocal SV, qui synthétise éventuellement une partie du message sélectionné à l'étape E5. Cette synthèse est notamment nécessaire lorsque cette partie du message dépend de paramètres tels qu'un texte écrit dans l'agenda en ligne de l'utilisateur.

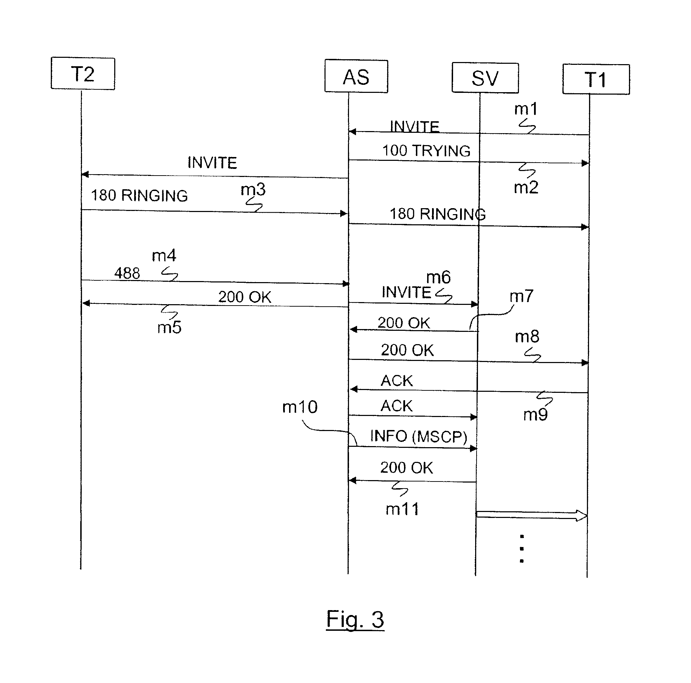

On décrit maintenant plus précisément, en relation avec la figure 3, les messages échangés dans le réseau de communication RES lors d'un appel de l'utilisateur du terminal T1 à l'utilisateur du terminal T2 lorsque l'invention est mise en oeuvre, c'est-à-dire lorsque l'utilisateur du terminal T2 ne répond pas à l'appel mais appuie sur la touche "raccroché" du terminal T2.

Il est à noter que dans la figure 3, par souci de clarté, les entités techniques de l'infrastructure IMS, telles que les serveurs proxy S-CSCF ou P-CSCF, ne sont pas représentées.

La composition du numéro de téléphone du terminal T2 par l'utilisateur du terminal T1 déclenche l'envoi, par le terminal T1, d'un message m1 "SIP Invite" dans le réseau de communication RES, message qui est intercepté par le serveur d'application AS selon l'étape E1 du procédé de notification selon l'invention. Ce message m1 comporte des paramètres SDP (d'après l'anglais "Session Description Protocol") de session correspondant au terminal T1. A la réception du message m1, le serveur d'application AS envoie un message m2 "SIP 100 Trying" au terminal T1, pour lui indiquer que l'établissement de l'appel est en cours, et transmet le message m1 "SIP Invite" au terminal T2, selon l'étape E2 du procédé de notification selon l'invention.

A la réception du message m1, le terminal T2 envoie un message m3 "SIP 180 Ringing" au serveur d'application AS pour lui indiquer qu'il est en train d'alerter l'utilisateur du terminal T2, par exemple par une sonnerie. Ce message est relayé par le serveur d'application AS au terminal T1 pour jouer à l'appelant un retour de sonnerie. Lorsque l'utilisateur du terminal T2 appuie sur le bouton "raccroché" de son terminal, celui-ci envoie un message m4 "SIP 488" au serveur d'application AS, qui détecte ainsi le refus de l'appel par l'utilisateur du terminal T2 selon l'étape E3 du procédé selon l'invention.

Le serveur d'application AS répond positivement au terminal T2 par un message m5 "SIP 200 OK" puis détermine un contexte lié à l'appel selon l'étape E4 du procédé selon l'invention et sélectionne selon l'étape E5 du procédé selon l'invention, un message de notification à envoyer à l'utilisateur du terminal T1. Pour faire jouer ce message de notification à l'utilisateur du terminal T1 selon l'étape E6 du procédé de notification selon l'invention, le serveur d'application AS envoie un message m6 "SIP Invite" au serveur vocal SV, comportant les paramètres SDP de session correspondant au terminal T1, reçus précédemment dans le message m1. Le serveur vocal SV répond au message m6 par un message m7 "SIP 200 OK", envoyé au serveur d'application AS et comportant les paramètres de session SDP du serveur vocal SV. Le serveur d'application AS transmet ensuite ces paramètres SDP du serveur vocal SV dans un message m8 "SIP 200 OK" au terminal T1, qui acquitte la réception de ce message m8 par l'envoi d'un message m9 "SIP ACK" au serveur d'application AS, qui le transfère au serveur vocal SV.

Il est à noter que les paramètres SDP du terminal T1 permettent au serveur d'application AS de choisir un format de message de notification à envoyer au terminal T1 en fonction des capacités du terminal T1, dans le cas où ce message n'est pas uniquement un message vocal ou est un message texte par exemple, ce qui n'est pas le cas dans ce mode de réalisation de l'invention, mais est envisageable dans d'autres modes de réalisation de l'invention.

Puis le serveur d'application AS envoie un message m10 "SIP Info" comportant une requête MSCP au serveur vocal SV, pour indiquer au serveur vocal SV un identifiant de message vocal à jouer et/ou éventuellement un texte à synthétiser. A la réception du message m10, le serveur vocal répond positivement au serveur d'application AS par un message m11 "SIP 200 OK", puis joue et/ou synthétise le message de notification à l'utilisateur du terminal T1. Ce message de notification est par exemple "Votre interlocuteur est indisponible mais a pris acte de votre appel, il vous rappellera dans deux heures". La dernière partie de ce message, "dans deux heures", est par exemple synthétisée car déduite par le serveur d'application AS de l'agenda en ligne de l'utilisateur. Ce message spécifique aux refus d'appels de la part de l'utilisateur du terminal T2, diffère du message de notification configuré par défaut par l'utilisateur du terminal T2 pour les appels en absence, qui serait par exemple "Votre interlocuteur est momentanément indisponible, veuillez laisser un message".

Il est à noter que dans ce mode de réalisation de l'invention, la session de communication interceptée entre le terminal T1 et le terminal T2 est un appel téléphonique, mais l'invention est également réalisable lorsque la session de communication est un appel visiophonique ou multimédia. Dans ce dernier cas le serveur vocal est par exemple remplacé par un serveur de ressources multimédia permettant de transmettre à l'appelant un message de notification multimédia. Enfin, il n'est pas nécessaire d'implémenter toutes les étapes E1 à E6 pour implémenter l'invention, certaines étapes étant réalisables différemment ou optionnelles. Par exemple, si l'utilisateur du terminal T2 n'a pas préconfiguré de règles de sélection ou de création d'un message de notification spécifique en fonction d'un contexte prédéterminé, l'étape E4 n'est pas nécessaire.

## Revendications

1. Procédé de notification d'un terminal appelant (T1) ayant initié un établissement d'une session de communication avec un terminal appelé (T2), comportant une étape (E1) de réception d'une demande (m1) d'établissement d'une session de communication avec ledit terminal appelé (T2), et une étape (E2) de transmission de ladite demande (m1) audit terminal appelé (T2), **caractérisé en ce qu**'il comporte en outre:
- une étape (E3) de détection d'un évènement, ledit évènement étant un refus de ladite demande par un utilisateur dudit terminal appelé (T2),
- une étape (E5) de sélection d'un message de notification associé audit évènement,
- et une étape (E6) d'envoi dudit message audit terminal appelant (T1).

2. Procédé de notification selon la revendication 1, **caractérisé en ce que** ledit message de notification est un message vocal ou un message texte ou multimédia.

3. Procédé de notification selon la revendication 1 ou 2, **caractérisé en ce que** lors de ladite étape (E5) de sélection, ledit message de notification associé audit évènement est personnalisé en fonction d'une adresse de communication dudit terminal appelant (T1).

4. Procédé selon l'une quelconque des revendications 1 à 3, **caractérisé en ce que** ladite étape (E5) de sélection dépend d'une étape (E4) précédente de localisation du terminal appelé (T2) ou de consultation d'un agenda électronique d'un utilisateur dudit terminal appelé (T2).

5. Procédé de notification selon l'une quelconque des revendications 1 à 4, **caractérisé en ce que** ladite étape (E5) de sélection dépend de règles préconfigurées par un utilisateur sur une interface de configuration.

6. Système de communication comportant des moyens de réception d'une demande (m1) d'établissement d'une session de communication envoyée par un terminal appelant (T1) à destination d'un terminal appelé (T2), et des moyens de transmission de ladite demande (m1) audit terminal appelé (T2), **caractérisé en ce qu**'il comporte en outre:
- des moyens de détection d'un évènement, ledit évènement étant un refus de ladite demande par un utilisateur dudit terminal appelé (T2),
- des moyens de sélection d'un message de notification associé audit évènement,
- et des moyens d'envoi dudit message audit terminal appelant (T1).

7. Programme d'ordinateur comportant des instructions pour mettre en oeuvre le procédé de notification selon l'une quelconque des revendications 1 à 5, lorsqu'il est exécuté sur un ordinateur.
